# EUROPÄISCHE PATENTANMELDUNG

(11) **EP 4 542 258 A1**
(43) Veröffentlichungstag der Anmeldung: **23.04.2025**
(21) Anmeldenummer: 24180712.2
(22) Anmeldetag: 07.06.2024
(51) Int. Cl.: G01S 13/88, E05F 15/73, B60R 25/20, G01S 13/04, G01S 13/931

(54) **STEUERUNGSSYSTEM ZUM BERÜHRUNGSLOSEN VERSTELLEN EINER FAHRZEUGKLAPPE ODER EINER FAHRZEUGTÜR EINES KRAFTFAHRZEUGS SOWIE EIN KRAFTFAHRZEUG**

(30) Priorität: 17.10.2023 DE 102023128405
(71) Anmelder: HUF Hülsbeck & Fürst GmbH & Co. KG, 42551 Velbert (DE)
(72) Erfinder: WEHNER Dr., Philipp, 45879 Gelsenkirchen (DE); SCHINDLER, Mirko, 42549 Velbert (DE); LEIB, Steffen, 40885 Ratingen (DE)
(74) Vertreter: Zenz Patentanwälte Partnerschaft mbB

(57) **Zusammenfassung**

Die Erfindung betrifft ein Steuerungssystem (1) zum berührungslosen Verstellen einer Fahrzeugklappe (2) oder einer Fahrzeugtür (2') eines Kraftfahrzeugs (3).

Das Steuerungssystem (1) weist eine fahrzeugseitige Steuerungsanordnung (4) und ein tragbares Steuerungsgerät (5) mit einer Bedienschnittstelle (5') auf. Die fahrzeugseitige Steuerungsanordnung (4) umfasst:
- einen Elektromotor (6),
- einen Radarsensor (8), der beispielsweise im Stoßfänger (7) angeordnet ist,
- eine Steuereinrichtung (12),
- eine Funkkommunikationsschnittstelle (13).

Die Steuereinrichtung (12) ist ausgebildet und eingerichtet, auszuwerten, ob eine von dem Radarsensor (8) in einem Erfassungsraum (9), der auf dem Bodenbereich (10) endet, erfasste, von einem Bediener (14) beispielsweise in Richtung des Pfeils (11)ausgeübte Geste einer verifizierten Steuergeste entspricht.

Die Steuereinrichtung (12) ist ausgebildet, mit von der Funkkommunikationsschnittstelle (13) empfangenen Konfigurationsanweisungen (15) die hinterlegte verifizierte Steuergeste zu konfigurieren.

## Beschreibung

Die Erfindung betrifft ein Steuerungssystem zum berührungslosen Verstellen einer Fahrzeugklappe oder Fahrzeugtür eines Kraftfahrzeugs sowie, in einem weiteren Aspekt, ein Kraftfahrzeug. Die Funktionalität eines Steuerungssystems der hier vorliegenden Art basiert auf der Gewinnung von Sensordaten mit einem Radarsensor zur Erfassung einer Geste, die in einem Erfassungsbereich des Radarsensors ausgeübt wird. Die Geste wird sodann genutzt, um ein Verstellen einer Fahrzeugklappe oder Fahrzeugtür eines Kraftfahrzeugs auszulösen. Voraussetzung dafür ist, dass die erfasste Geste einer verifizierten Steuergeste entspricht.

Das Prinzip der Radartechnologie ist bereits seit dem frühen 20. Jahrhundert bekannt. Die Radartechnologie nutzt die Idee, elektromagnetische Wellen auszusenden, daraufhin das Echo, also die reflektierten Wellen, auch als Radarantwort bezeichnet, der ausgesendeten elektromagnetischen Wellen zu empfangen, und sodann die empfangenen reflektierten Wellen nach bestimmten Kriterien auszuwerten. Je nach konkreter Umsetzung können mit der Nutzung von Radartechnologie verschiedene Informationen über Objekte gewonnen werden, an denen das Echo durch Reflektion der ausgesendeten Wellen entsteht. So kann mit Radartechnologie beispielsweise eine Ortung eines Objekts gelingen. Weiterhin können, beispielsweise unter Ausnutzung des Dopplereffekts, Informationen über die relative Bewegung zwischen Sensor und reflektierendem Objekt gewonnen werden. Auch Informationen über die absolute Geschwindigkeit des Objekts können abgeleitet werden, ebenso wie, alternativ oder zusätzlich, Informationen über Konturen des reflektierenden Objekts.

In der Automobiltechnologie gewinnt die Nutzung der Radartechnologie zunehmend an Bedeutung. Ein Hintergrund hierfür ist der entstandene Wunsch, die Autonomie von Fahrzeugen zu erhöhen, wodurch die Weiterentwicklung der in Fahrzeugen nutzbaren Radarsensoren betrieben wurde. Diese Entwicklung hat nicht zuletzt dazu geführt, dass Radarsensoren, die zur Ausrüstung beispielsweise von Fahrzeugen geeignet sind, als zum Einbau bereite Zukaufsysteme vergleichsweise kostengünstig verfügbar geworden. Dadurch ist beispielsweise eine Nutzung in einem breiten Anwendungsspektrum in Serienmodellen in wirtschaftlich sinnvoller Weise ermöglicht worden. Mit Hilfe von am Markt verfügbaren Radarsensoren können für den Betrieb eines Kraftfahrzeugs Objekterkennungen mit hohem Maß an lateraler Reichweite sowie lateraler wie angularer Auflösung gewonnen werden. Soweit erforderlich, ist auch eine gute Zeitauflösung der mit Radarsensoren erfassten Daten erreichbar.

Die Nutzung von Radarsensoren hat den Vorteil, dass aufgrund des grundsätzlichen Funktionsprinzips, eine Radarantwort, das heißt: ein Echo elektromagnetischer Wellen, zur Informationsgewinnung zu nutzen, Informationen erhalten werden können, die über die Ergebnisse hinausgehen, die mit Ultraschallsensoren gewonnen werden können. Gegenüber der Nutzung von Lidar-Systemen wiederum, die grundsätzlich auch zur Gewinnung von Sensordaten hoher Qualität geeignet sind, haben Radarsensoren den für die Nutzung im Massenmarkt oftmals entscheidenden Vorteil, dass sie kostengünstiger beschaffbar sind.

Vor diesem Hintergrund besteht das Interesse, die Nutzung von Radarsensoren am Fahrzeug für einen möglichst umfassenden Komfortzuwachs bei der Benutzung des Fahrzeugs einzurichten.

Diese Aufgabe wird mit einem Steuerungssystem zum berührungslosen Verstellen einer Fahrzeugklappe oder einer Fahrzeugtür eines Kraftfahrzeugs mit den Merkmalen des Anspruchs 1 gelöst. Die Aufgabe wird außerdem mit einem Kraftfahrzeug mit den Merkmalen des Anspruchs 8 gelöst.

Es wird ein Steuerungssystem zum berührungslosen Verstellen einer Fahrzeugklappe oder einer Fahrzeugtür eines Kraftfahrzeugs vorgeschlagen.

Das Steuerungssystem weist eine fahrzeugseitige Steuerungsanordnung und ein tragbares Steuerungsgerät zur Einstellung des Steuerungssystems auf.

Die Steuerungsanordnung wiest einen mit der Fahrzeugklappe beziehungsweise Fahrzeugtür gekoppelten oder koppelbaren Elektromotor auf.

Die fahrzeugseitige Steuerungsanordnung umfasst ferner einen Radarsensor, der zur Erfassung von Gesten ausgebildet ist, die in einem Erfassungsbereich des Radarsensors ausgeführt werden. Bei dem Radarsensor kann es sich beispielsweise um einen im Frequenzbereich um 24 GHz, beispielsweise zwischen 23 und 25 GHz, oder um einen im Frequenzbereich um 60 GHz, beispielsweise zwischen 59 und 61 GHz, oder um einen im Frequenzbereich zwischen 77 GHz und 81 GHz arbeitenden Radarsensor handeln. Die genannten Frequenzbereiche werden bei marktverfügbaren Radarsensoren häufig genutzt, was unter anderem regulatorische Gründe oder Gründe der elektromagnetischen Verträglichkeit hat. Radarsensoren in den genannten Frequenzbereichen werden aufgrund der Wellenlänge der ausgesandten elektromagnetischen Wellen im Englischen gelegentlich auch als *mmWave* bezeichnet.

Mit dem Radarsensor und dem Elektromotor ist erfindungsgemäß eine Steuereinrichtung gekoppelt, die fahrzeugseitig zur Auswertung von mit dem Radarsensor gewonnenen Daten und/oder zur Ansteuerung des Elektromotors ausgebildet ist. Diese Steuereinrichtung kann beispielsweise dazu dienen, in Abhängigkeit von einer vor dem Radarsensor ausgeführten Geste den Elektromotor anzusteuern. Bei der Steuereinrichtung kann es sich beispielsweise um einen Mikrocontroller handeln. Alternativ kann das Steuergerät als ein zentrales kraftfahrzeugseitiges Steuergerät ausgebildet sein.

Ferner ist mit der Steuereinrichtung eine Funkkommunikationsschnittstelle der Steuerungsanordnung gekoppelt. Über die Funkkommunikationsschnittstelle ist die Steuereinrichtung befähigt, mit einem externen, ebenfalls zur Funkkommunikation eingerichteten Gegengerät Informationen auszutauschen. Die Funkkommunikationsschnittstelle kann beispielsweise als eine Bluetooth^{®}-Schnittstelle ausgebildet sein, bevorzugt als eine Bluetooth0-Low-Energy-Schnittstelle, kurz: BLE-Schnittstelle.

Die Steuereinrichtung ist erfindungsgemäß ausgebildet und eingerichtet, eine Auswertung durchzuführen, ob eine Geste, die in dem Erfassungsraum des Radarsensors ausgeübt ist und die von dem Radarsensor erfasst wurde, einer verifizierten Steuergeste entspricht. Die verifizierte Steuergeste ist definiert durch Referenzdaten, die auf der Steuereinrichtung oder auf einem mit der Steuereinrichtung gekoppelten Speichermittel, beispielsweise einer SSD, hinterlegt sind. Bei der verifizierten Steuergeste handelt es sich um eine vorgegebene, hinterlegte Geste, die festgelegt ist als eine Geste, die das Auslösen des Verstellens der Fahrzeugklappe beziehungsweise Fahrzeugtür freigibt. Die Steuereinrichtung ist also in der Lage, eine von dem Radarsensor erfasste Radarantwort einer Steuergeste, die in dem Erfassungsraum vor dem Radarsensor durchgeführt worden ist, dahingehend auszuwerten, ob sie - gegebenenfalls innerhalb von vorab definierten zulässigen Bandbreiten einer Erkennungsgenauigkeit - der vorgesehenen, verifizierten Steuergeste entspricht. Die definierten zulässigen Bandbreiten einer Erkennungsgenauigkeit sind von der ausführenden Fachperson fachmännisch auszulegen, beispielsweise in Abhängigkeit von einem fachmännisch auszulegenden Trade-Off zwischen der Häufigkeit von False-Negatives und der Häufigkeit von False-Positives. Diese fachmännische Tätigkeit stellt die Fachperson nicht vor Probleme, die innerhalb des Rahmens der beschriebenen Erfindung liegen.

Dadurch, dass die Steuereinrichtung erfindungsgemäß ausgebildet und eingerichtet ist, eine Auswertung durchzuführen, ob eine Geste, die in dem Erfassungsraum des Radarsensors ausgeübt wird und die von dem Radarsensor erfasst wird, einer verifizierten Steuergeste entspricht, kann beispielsweise in besonders vorteilhafter Weise erreicht werden, dass dann, wenn die erfasste Steuergeste der verifizierten Steuergeste entspricht, das Auswerten als positives Ergebnis angesehen wird, woraufhin von der Steuereinrichtung in Reaktion auf das erhaltene positive Ergebnis des Auswertens das Verstellen der Fahrzeugklappe beziehungsweise der Fahrzeugtür mittels des Elektromotors veranlasst wird. Im Gegensatz dazu wird dann, wenn die erfasste Steuergeste nicht der verifizierten Steuergeste entspricht, die erfasste Geste als Fehlauslösung oder als zu ignorierende Geste verworfen. Das Vorgehen an sich, welches das Erfassen einer Geste mit dem Radarsensor und das Prüfen der Geste daraufhin umfasst, ob es sich um eine verifizierte Steuergeste handelt, ist der Fachperson bekannt und von dieser unproblematisch umsetzbar.

Das ebenfalls zu dem Steuerungssystem gehörende tragbare Steuerungsgerät weist eine Bedienschnittstelle auf sowie zur Funkkommunikation mit der Funkkommunikationsschnittstelle der fahrzeugseitigen Steuerungsanordnung erforderliche Kommunikationsvorrichtungen. Beispielsweise ist in einem Fall, dass die Funkkommunikationsschnittstelle der fahrzeugseitigen Steuerungsanordnung eine Bluetooth^{®}-Schnittstelle ist, das tragbare Steuerungsgerät ebenfalls mit einer Bluetooth^{®}-Schnittstelle versehen, wobei bevorzugt das tragbare Steuerungsgerät und die fahrzeugseitige Steuerungsanordnung gekoppelt sind im Sinne der Bluetooth^{®}-Kopplung.

Das tragbare Steuerungsgerät ist erfindungsgemäß ausgebildet und eingerichtet, in Abhängigkeit von einer über die Bedienschnittstelle erhaltenen Benutzereingabe Konfigurationsanweisungen an die Kommunikationsschnittstelle der fahrzeugseitigen Steuerungsanordnung zu senden. Die Steuereinrichtung wiederum, bei der es sich- wie eingangs erläutert - um ein Bestandteil der fahrzeugseitigen Steuerungsanordnung handelt, ist ausgebildet und eingerichtet, mit den von der Funkkommunikationsschnittstelle der fahrzeugseitigen Steuerungsanordnung empfangenen Konfigurationsanweisungen die hinterlegte verifizierte Steuergeste zu konfigurieren.

Es ist also vorgesehen, ein tragbares Steuerungsgerät bereitzustellen, das über eine Bedienschnittstelle bedienbar ist, wobei in Abhängigkeit von der Bedienung über die Bedienschnittstelle die hinterlegte verifizierte Steuergeste konfiguriert wird. Das Konfigurieren der hinterlegten Steuergeste kann insbesondere umfassen: Auswählen aus einer Mehrzahl von Steuergesten der zum Auswerten zu berücksichtigenden hinterlegten Steuergeste als verifizierte Steuergeste und/oder Einstellen der hinterlegten Steuergeste durch Überschreiben mit den die verifizierte Steuergeste definierenden Daten.

Mit der Bereitstellung eines tragbaren Steuerungsgeräts der erfindungsgemäßen Weise und der zur Kommunikation mit dem tragbaren Steuerungsgerät ausgebildeten fahrzeugseitigen Steuerungsanordnung kann in vorteilhafter Weise erreicht werden, dass ein Bediener eine verifizierte Steuergeste zum berührungslosen Verstellen einer Fahrzeugklappe oder einer Fahrzeugtür eines Kraftfahrzeugs individuell verändern kann. Dadurch kann der Bediener die Steuergeste, die für ein Auslösen einer berührungslosen Verstellung einer Fahrzeugklappe oder einer Fahrzeugtür eines Kraftfahrzeugs erforderlich ist, in vorteilhafter Weise auf seine eigenen Bedürfnisse hin konfigurieren. Dadurch, dass die Konfiguration über das tragbare Steuerungsgerät erfolgt, ist diese Einstellung möglich, ohne unmittelbaren physischen Zugang zu dem Fahrzeug zu haben. Dies ermöglicht beispielsweise, dass das tragbare Steuerungsgerät eine Mehrzahl von Benutzerprofilen aufweist, wobei jedem Benutzerprofil eine individuelle verifizierte Steuergeste zugeordnet ist, so dass in Abhängigkeit von einem die Nutzung des Fahrzeugs planenden Benutzers eine entsprechende verifizierte Steuergeste konfiguriert, beispielsweise ausgewählt, werden kann. Aufbauend auf einem solchen Konzept kann auf unkomplizierte und komfortable Weise beispielsweise eine situationsangepasste Individualisierung des Verhaltens des Fahrzeugs erreicht werden, was beispielsweise in Umgebungen von besonderem Vorteil ist, in denen Kraftfahrzeuge grundsätzlich mehreren Benutzern offenstehen, es eignet sich also beispielsweise zur Anwendung in Fuhrparks oder in einem Mietwagenverleih.

Besonders bevorzugt ist eine Weiterbildung, gemäß welcher auf dem tragbaren Steuerungsgerät eine Anzahl von mehreren Gestenkonfigurationsdatensätzen hinterlegt ist, die über die Bedienschnittstelle mittels Benutzereingabe auswählbar sind. Dabei kann beispielsweise vorgesehen sein, dass nach dem Auswählen eines Gestenkonfigurationsdatensatzes aus der Anzahl von mehreren Gestenkonfigurationsdatensätzen der ausgewählte Gestenkonfigurationsdatensatz als Konfigurationsanweisungen an die Kommunikationsschnittstelle übersandt wird. Ein Gestenkonfigurationsdatensatz bezeichnet dabei eine Menge von als Daten abgelegten Informationen, welche zur Charakterisierung einer verifizierten Steuergeste geeignet sind, so dass mit der Bereitstellung eines Gestenkonfigurationsdatensatzes zu der Steuereinrichtung die Steuereinrichtung in der Lage ist, eine mit dem Gestenkonfigurationsdatensatz gekennzeichnete verifizierte Steuergeste als durch eine erfasste Geste erfüllt oder nicht erfüllt zu bestimmen im Rahmen der Auswertung. Die Daten können beliebiger Art sein, wobei zeitabhängige Koordinaten in einer oder mehreren, beispielsweise drei, Dimensionen, beispielsweise in kartesischen Koordinaten, aufgrund ihres potentiell hohen Maßes an Bestimmtheit von besonderem Vorteil sind.

Besonders bevorzugt ist eine Weiterbildung eines Steuersystems, bei das tragbare Steuerungsgerät in solcher Weise eingerichtet ist, dass auf dem tragbaren Steuerungsgerät eine Anzahl von mehreren Steuergesten repräsentiert wird, die über die Bedienschnittstelle mittels Benutzereingabe auswählbar sind. Beispielsweise kann eine Anzahl von mehreren Steuergesten anhand von Piktogrammen oder anhand von Beschreibungen in einer Liste dargestellt werden. Nach dem Auswählen einer Steuergeste aus der Anzahl von mehreren Steuergesten werden sodann als ein Indikator ausgebildete Konfigurationsanweisungen an die Kommunikationsschnittstelle übersandt. Dieser Indikator ist im einfachsten Fall beispielsweise eine aus einer Anzahl von Ordnungsnummern, wobei jede Ordnungsnummer eineindeutig einer aus einer Anzahl der vorhandenen Steuergesten zugeordnet ist, beispielsweise in laufender Nummerierung.

Bevorzugt ist gemäß einer Ausführungsform vorgesehen, dass auf der Steuereinrichtung oder auf einem mit der Steuereinrichtung gekoppelten Speichermittel, beispielsweise einer SSD, eine Anzahl von mehreren Gestenkonfigurationsdatensätzen hinterlegt ist, wobei jeder Gestenkonfigurationsdatensatz einer Steuergeste aus der Anzahl von mehreren Steuergesten entspricht und über den oben eingeführten Indikator eindeutig zuordenbar sind. Diese Ausführungsform weist also in dem Unterschied zu der zuvor beschriebenen Ausführungsform das Merkmal auf, dass die Gestenkonfigurationsdatensätze, welche die von der Steuereinrichtung der Steuerungsanordnung nutzbaren Anweisungen enthalten, auf der Steuereinrichtung gespeichert sind oder auf einem mit der Steuereinrichtung gekoppelten Speichermittel gespeichert sind und ausgehend von dem tragbaren Steuerungsgerät eine Auswahl aus einem der Gestenkonfigurationsdatensätze erfolgt; das heißt: die Information, die von dem tragbaren Steuerungsgerät übermittelt wird, dient also nicht zur Übermittlung der vollständigen Anweisungen, welche die Steuereinrichtung sodann unmittelbar nutzt, sondern sie dient zur Übermittlung der zu treffenden Auswahl aus zuvor auf der Steuereinrichtung oder einem mit der Steuereinrichtung gekoppelten Speichermedium hinterlegten Anweisungen in Form von Gestenkonfigurationsdatensätzen. Diese Vorgehensweise hat den Vorteil, dass die auf dem tragbaren Steuerungsgerät vorzuhaltende Datenmenge geringer ist, ebenso wie die Menge der von dem tragbaren Steuerungsgerät zu der fahrzeugseitigen Steuerungsanordnung zu übermittelnden Daten, was nicht zuletzt mit Hinblick auf den geringeren Energiebedarf des tragbaren Steuerungsgeräts von Vorteil ist. Auch der üblicherweise angestrebten Miniaturisierung tragbarer Steuerungsgeräte kommt diese Weiterbildung zu Gute.

Besonders bevorzugt ist, dass die Benutzereingabe eine Auswahl aus einer Liste umfasst
und/oder
eine Ausübung einer Bewegung an dem Steuergerät umfasst, das mit einer als Bewegungssensor ausgebildeten Bedienschnittstelle ausgestattet ist,
   und/oder
eine auf einem Touchscreen des Steuergeräts gemalte Bewegungsausführung umfasst.

Beispielsweise kann also vorgesehen sein, dass das tragbare Steuerungsgerät eine Liste ausgibt, aus welcher der Benutzer eine Konfigurationsanweisung aus einer Anzahl von Konfigurationsanweisungen auswählt. Bei einem tragbaren Steuerungsgerät, das beispielsweise einen Touchscreen aufweist, kann dieser Touchscreen zur Ausgabe der Liste und zur Auswahl der Konfigurationsanweisung aus der Liste nutzen.

Alternativ oder zusätzlich dazu kann vorgesehen sein, dass ein Benutzer eine Bewegung ausübt, wobei von dem tragbaren Steuerungsgerät, das über einen Bewegungssensor des tragbaren Steuerungsgeräts sowie eine mit dem Bewegungssensor gekoppelte Auswerteeinrichtung verfügt, beispielsweise einen Mikrocontroller, die Bewegung des Steuerungsgerät einer der ausgeführten Bewegung nächstliegenden hinterlegten Steuergeste zugeordnet wird, und dadurch die Auswahl aus einer Liste herbeigeführt wird.

Alternativ oder zusätzlich kann vorgesehen sein, dass der Bediener eine Bewegungsausführung auf einem Touchscreen in Form einer zweidimensionalen Trajektorie malt, wobei sodann die Trajektorie mittels einer auf dem tragbaren Steuerungsgerät hinterlegten Software mit einer Menge von hinterlegten Steuergesten verglichen wird, und diejenige Konfigurationsanweisungen zur Übermittlung an die Steuereinrichtung ausgewählt wird, welche derjenigen hinterlegten Steuergeste aus der Gesamtheit der hinterlegten Steuergesten entspricht, welche der Trajektorie am nächsten liegt, das heißt beispielsweise: anhand eines vordefinierten mathematischen Zusammenhangs den geringsten Abstand aufweist.

Alternativ kann vorgesehen sein, dass die Benutzereingabe eine auf dem Touchscreen gemalte Bewegungsausführung umfasst, wobei das Steuerungsgerät ausgebildet und eingerichtet ist, aus der Anzahl von mehreren Steuergesten diejenige Steuergeste auszuwählen, welche von der Projektion der Bewegung auf die Abbildungsebene des Touchscreens am geringsten abweicht, das heißt beispielsweise: anhand eines vordefinierten mathematischen Zusammenhangs den geringsten Abstand aufweist.

In einer Ausführungsform des Steuerungssystems ist das Steuerungssystem mit einem Konfigurationsmodus ausgestattet. Der Konfigurationsmodus, in den beispielsweise über eine explizite Auswahl an einem fahrzeugseitigen Schalter oder über eine bestimmte ausgeübte Tastenkombination am tragbaren Steuerungsgerät eingetreten werden kann, ist bevorzugt wie folgt ausgebildet:
Die Steuerungsanordnung ist ausgebildet und eingerichtet, in den Konfigurationsmodus die Konfigurationsanweisungen zu empfangen.

Nach dem Empfangen der Konfigurationsanweisungen wird in Reaktion auf den Empfang der Konfigurationsanweisungen der Erfassungsraum auf das Vorhandensein einer Geste hin überwacht, das heißt: nachdem die Steuerungsanordnung in den Konfigurationsmodus eingetreten ist und in dem Konfigurationsmodus Konfigurationsanweisungen empfangen worden sind, erwartet die Steuereinrichtung eine im Erfassungsbereich des Radarsensors ausgeübte Geste und überwacht den Erfassungsraum daraufhin. Für das Überwachen auf eine ausgeübte Geste wird insbesondere der Radarsensor zum Senden von Radarwellen und zum Empfangen der Radarantwort angesteuert.

Nach dem Empfangen der Radarantwort wird diese daraufhin ausgewertet ausgewertet, ob die Radarantwort einer erfassten Geste entspricht, welche innerhalb der Parameter liegt, die durch die erhaltenen Konfigurationsanweisung definiert sind. Das heißt: Die erfasste Geste wird daraufhin ausgewertet, ob sie die mit den Konfigurationsanweisungen gegebenen Parameter, welche eine verifizierte Steuergeste definieren, erfüllen oder nicht.

Im Fall, dass die erfasste Geste die Konfigurationsanweisungen nicht erfüllt, dem sogenannten Negativfall, wird auf Veranlassung der Steuereinrichtung die Ausgabe eines ersten Feedbacksignal veranlasst, beispielsweise eines vorgegebenen ersten Hupsignals und/oder eines vorgegebenen ersten Blinksignals, beispielsweise mit den Warnblinkern. Daraufhin wird die oben erwähnte Überwachung des Erfassungsraums auf das Ausüben einer Geste hin wiederholt fortgeführt, und zwar so lange, bis entweder ein erfolgreiches Durchführen der Geste erkannt worden ist, oder ein vorab in der Steuereinrichtung hinterlegter Timeout erreicht worden ist. Der Timeout kann beispielsweise als vorgegebene Zeitdauer festgelegt sein, die beispielsweise einen Wert zwischen 30 Sekunden und 5 Minuten hat. Der Timeout kann alternativ oder zusätzlich als maximale Anzahl von Negativfällen definiert sein, die beispielsweise als ein Wert zwischen 3 und 10 festgelegt sein kann. In diesem Fall, dass der Positivfall innerhalb eines Timeouts nicht erreicht wird, wird am Ende des Timeouts der Konfigurationsmodus verlassen, und zwar ohne dass die Konfigurationsanweisungen zur Konfiguration der verifizierten Steuergeste genutzt werden. Wenn der oben bereits erwähnte Fall eintritt, dass vor Erreichen des Timeouts erkannt worden ist, dass die erfasste Geste die Konfigurationsanweisungen erfüllt, dem sogenannten Positivfall, wird ein zweites Feedbacksignal ausgegeben, und die verifizierte Steuergeste wird mit den mit den Konfigurationsanweisungen konfiguriert, sodann wird der Konfigurationsmodus verlassen. Das zweite Feedbacksignal kann beispielsweise als vorgegebenes zweites Hupsignal und/oder vorgegebenes zweites Blinksignal ausgebildet sein.

Mit dieser Vorgehensweise wird in vorteilhafter Weise erreicht, dass es sichergestellt ist, dass ein Bediener ausschließlich eine Steuergeste als verifizierte Steuergeste auswählen und hinterlegen kann, zu deren Durchführung er in motorischer Hinsicht auch in der Lage ist oder deren Durchführung er als angenehm empfindet. Dadurch wird ausgeschlossen, dass eine ausübbare Geste mit einer für einen gegebenen Bedienet nicht ausübbaren, oder zumindest nicht komfortabel ausübbaren, Geste überschrieben wird. Dadurch wird der Nachteil vermieden, dass beispielsweise ein motorisch gehandicapter Bediener von der berührungslosen Bedienung der Fahrzeugklappe beziehungsweise der Fahrzeugtür ausgeschlossen wird. Stattdessen würde einem Bediener nach dem mehrmaligen Erhalten des ersten Feedbacksignals die Motivation gegeben, eine andere Konfigurationsanweisung auszuwählen und mit dieser eine alternative verifizierte Steuergeste auszuwählen, deren Durchführung für ihn besser bewerkstelligt werden kann.

Besonders bevorzugt ist die Kommunikationsschnittstelle eine Bluetooth^{®}-Schnittstelle, was mit dem Vorteil verbunden ist, dass tragbare Steuerungsgeräte mit geringen Kosten mit einer solchen Kommunikationsschnittstelle ausgestattet werden können.

Besonders bevorzugt handelt es sich bei dem tragbaren Steuerungsgerät um ein Smartphone mit einer als Touchscreen ausgebildeten Bedienschnittstelle und/oder einer als Bewegungssensor ausgebildeten Bedienschnittstelle. Die Nutzung eines Smartphones als tragbares Steuerungsgeräte hat den Vorteil, dass eine Vielzahl von potenziellen Bedienern bereits über ein derartiges Gerät verfügt. Die Anpassung des als Smartphone ausgebildeten tragbaren Steuerungsgeräts zur Eingabe der Benutzereingabe, mit welcher Konfigurationsanweisungen an die Funkkommunikationsschnittstelle der fahrzeugseitigen Steueranordnung gesendet werden können, um mit deren Übersendung eine Konfiguration der hinterlegten verifizierten Steuergeste auf der fahrzeugseitigen Steuereinrichtung herbeizuführen, kann dann über Softwareanpassung erfolgen, beispielsweise in Form der Bereitstellung einer geeigneten App.

Ein Gedanke der Erfindung betrifft ein Kraftfahrzeug, das eine Fahrzeugklappe, beispielsweise Kofferraumklappe, und/oder eine Fahrzeugtür aufweist, sowie ferner ein Steuerungssystem der oben beschriebenen Weise oder eins seiner Weiterbildungen aufweist, um das berührungslose Verstellen der Fahrzeugklappe beziehungsweise Fahrzeugtür bereitzustellen. Besonders bevorzugt handelt es sich bei der Fahrzeugklappe um eine Kofferraumklappe, wobei der Radarsensor im Bereich des hinteren Stoßfängers oder an dem hinteren Stoßfänger oder in dem hinteren Stoßfänger angeordnet ist. Die Anordnung des Radarsensors ist bevorzugt so gewählt, dass der Erfassungsbereich von dem hinteren Stoßfänger ausgehend auf den hinter das Fahrzeug gerichteten Bodenbereich orientiert ist, so dass als verifizierte Steuergeste eine hinter dem Fahrzeug ausgeübte Kickbewegung mit dem Fuß dienen kann, bei welcher der Fuß im Verlauf der Kickbewegung unter den Stoßfänger kickend geführt wird.

Weitere Einzelheiten, Merkmale und Vorteile des erfindungsgemäßen Steuerungssystems ergeben sich aus der nachfolgenden Beschreibung in Zusammenhang mit den Figuren, in denen beispielhaft ein Ausführungsbeispiel der Erfindung dargestellt ist.

Es versteht sich, dass die vorstehend genannten wie auch die nachfolgend erläuterten Merkmale nicht nur in der jeweils angegebenen Kombination, sondern auch in anderen Kombinationen oder in Alleinstellung verwendbar sind. Es zeigen:
Fig. 1: ein Ausführungsbeispiel eines erfindungsgemäßen Steuerungssystems;
Fig. 2: ein Ablaufdiagramm von Schrittfolgen in einem Konfigurationsmodus, zu deren Ausübung das in Fig. 1 dargestellte Steuerungssystem ausgebildet ist.

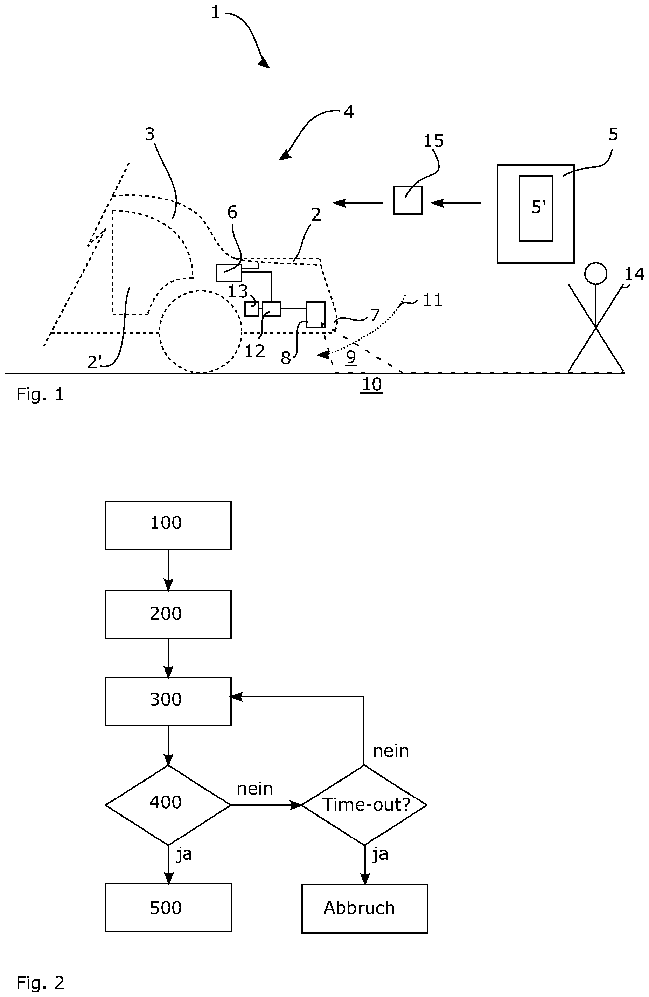

In Fig. 1 ist ein Ausführungsbeispiel eines erfindungsgemäßen Steuerungssystems 1 gezeigt. Aufgrund der apparativen und elektrotechnischen Einrichtung des Steuerungssystems kann mit Steuerungssystem eine als Kofferraumklappe 2 ausgebildete Fahrzeugklappe 2 des Kraftfahrzeugs 3 verstellt werden.

Das Steuerungssystem 1 weist eine fahrzeugseitige Steuerungsanordnung 4 und ein tragbares Steuerungsgerät 5 zur Einstellung des Steuerungssystems 1 auf.

Als Bestandteil der fahrzeugseitigen Steuerungsanordnung 4 ist ein mit der Kofferraumklappe gekoppelter Elektromotor 6 vorgesehen. An dem hinteren Stoßfänger 7 ist ein Radarsensor 8 angeordnet. Der Radarsensor 8 ist so gewählt, dass der Erfassungsbereich 9 des Radarsensors von dem hinteren Stoßfänger 7 ausgehend auf den hinter das Fahrzeug gerichteten Bodenbereich 10 orientiert ist, so dass als verifizierte Steuergeste eine hinter dem Fahrzeug ausgeübte Kickbewegung mit dem Fuß dienen kann, bei welcher der Fuß im Verlauf der Kickbewegung unter die Stoßstange kickend geführt wird, beispielsweise entlang der Trajektorie des Pfeils 11. Mit dem Radarsensor 8 und dem Elektromotor 6 ist eine Steuereinrichtung 12 gekoppelt. Zur Herstellung einer Kommunikationsmöglichkeit der Steuereinrichtung 12 mit einem geeigneten Gegengerät weist die Steueranordnung 4 eine mit der Steuereinrichtung 12 verbundene Funkkommunikationsschnittstelle 13 auf, die beispielsweise als Bluetooth^{®}-Schnittstelle ausgebildet ist. Die Steuereinrichtung 12 ist programmiert, eine von dem Radarsensor 8 erfasste Geste, die in dem Erfassungsraum 9 durchgeführt wird, daraufhin auszuwerten, ob die Geste einer verifizierten Steuergeste entspricht oder von dieser zumindest nicht über ein toleriertes Maß hinaus abweicht. Wenn eine der beiden Bedingungen erfüllt ist, was auf Grundlage von auf der Steuereinrichtung 12 oder auf einem mit der Steuereinrichtung 12 gekoppelten Speichermittel hinterlegten Daten geprüft wird wird ein positives Ergebnis des Auswertens angenommen und das Verstellen der Fahrzeugklappe 2 mittels des Elektromotors 6 veranlasst.

Um die hinterlegte verifizierte Steuergeste anpassen zu können, ist die Steuereinrichtung 12 vorbereitet, mit dem tragbaren Steuerungsgerät 5 zu kommunizieren, das in der gezeigten Ausführungsform als Smartphone ausgebildet ist, das eine als Touchscreen ausgeführte Bedienschnittstelle 5' aufweist und aufgrund der Funkkommunikationseinrichtungen üblicher Smartphones sowie einer auf die Verwendung mit dem Steuerungssystem 1 angepasste Software, als App ausgebildet, in der Lage ist, eine Funkkommunikation mit der Funkkommunikationsschnittstelle 13 der fahrzeugseitigen Steuerungsanordnung 4 durchzuführen und dabei in Abhängigkeit von einer über die Bedienschnittstelle 5' erhaltenen Benutzereingabe Konfigurationsanweisungen an die Funkkommunikationsschnittstelle der fahrzeugseitigen Steuerungsanordnung zu senden. Dazu kann beispielsweise der Bediener 14 über den Touchscreen eine Auswahl über vorab definierte Steuergesten treffen, woraufhin eine die gewählte Steuergeste benennende Konfigurationsanweisung 15 an die Steuereinrichtung 12 übermittelt wird. Die Steuereinrichtung 12 erkennt die Konfigurationsanweisung und wählt anhand des erhaltenen Identifikators einen von dem Identifikator eindeutig benannten Gestenkonfigurationsdatensatz aus, der in einer Menge von Gestenkonfigurationsdatensätzen mit den von der Funkkommunikationsschnittstelle empfangenen Konfigurationsanweisungen auf der Steuereinrichtung 12 oder auf einem mit der Steuereinrichtung 12 gekoppelten Speichermittel hinterlegt ist. Der ausgewählte Gestenkonfigurationsdatensatz dient der Konfiguration der hinterlegten verifizierten Steuergeste, sodass die durch den ausgewählten Gestenkonfigurationsdatensatz definierte Geste fortan als neue hinterlegte verifizierte Steuergeste zur Gegenprüfung von mit dem Radarsensor erfassten Gesten auf die eine Verstellung auslösende Geste hin genutzt wird.

Um den Komfort bei der Konfiguration weiter zu erhöhen, und um sicherzustellen, dass eine vom Bediener vorgenommene Konfiguration eine für ihn komfortable verifizierte Steuergeste vorsieht, ist das beschriebene Steuerungssystem, beispielsweise auch das in der Ausführungsform der Fig. 1 ausgebildete Steuerungssystem, mit einem Konfigurationsmodus ausgestattet. Dieser sieht die nachfolgenden Schritte vor:
Schritt 100: Konfigurationsmodus wird gestartet, beispielsweise durch einen Befehl in einer App des tragbaren Steuerungsgeräts, der an die fahrzeugseitige Steuereinrichtung übermittelt wird;
Schritt 200: in dem Konfigurationsmodus wird eine Konfigurationsanweisung zu empfangen;
Schritt 300: nach dem Empfang der Konfigurationsanweisungen und in Reaktion auf den Empfang der Konfigurationsanweisungen wird mit dem Radarsensor der Erfassungsraum auf eine Geste überwacht;
Schritt 400: wenn eine Geste erfasst wird, Auswerten, ob die von dem Radarsensor erfasste Geste den Konfigurationsanweisungen entspricht, wobei im Negativfall, also einer Nichtentsprechung, ein erstes Feedbacksignal ausgegeben wird und zu Schritt 300 zurückgekehrt wird, solange der Timeout noch nicht erreicht ist, und ansonsten ergebnislos abgebrochen wird. Das erste Feedbacksignal kann ein akustisches Signal sein, das beispielsweise mit der Fahrzeughupe ausgegeben wird, oder ein optisches Signal sein, das beispielsweise mit den Blinkleuchten des Fahrzeugs ausgegeben wird, oder eine Kombination aus beidem sein. Der Timeout kann eine Anzahl von Nichtentsprechungen, also Anzahl von Negativfällen, in denen die von dem Radarsensor erfasste Geste nicht den Konfigurationsanweisungen entspricht, sein oder alternativ eine Maximalzeitdauer, die seit dem Start des Konfigurationsmodus vergangen ist;
Im Positivfall wird als Schritt 500 ein zweites Feedbacksignal ausgegeben, wobei mit den Konfigurationsanweisungen die verifizierte Steuergeste konfiguriert wird und sodann der Konfigurationsmodus verlassen wird. Das zweite Feedbacksignal kann ein akustisches Signal sein, das beispielsweise mit der Fahrzeughupe ausgegeben wird, oder ein optisches Signal sein, das beispielsweise mit den Blinkleuchten des Fahrzeugs ausgegeben wird, oder eine Kombination aus beidem sein.

## Patentansprüche

1. Steuerungssystem (1) zum berührungslosen Verstellen einer Fahrzeugklappe (2) oder einer Fahrzeugtür (2`) eines Kraftfahrzeugs (3),
wobei das Steuerungssystem (1) eine fahrzeugseitige Steuerungsanordnung (4) und ein tragbares Steuerungsgerät (5) zur Einstellung des Steuerungssystems umfasst,
wobei die fahrzeugseitige Steuerungsanordnung (4) aufweist:
- einen mit der Fahrzeugklappe (2) beziehungsweise Fahrzeugtür (2') koppelbaren oder gekoppelten Elektromotor (6),
- einen Radarsensor (8) zur Erfassung von in einem Erfassungsbereich des Radarsensors ausgeführten Gesten,
- eine mit dem Radarsensor (8) und dem Elektromotor (6) gekoppelte Steuereinrichtung, sowie
- eine mit der Steuereinrichtung (12) gekoppelte Funkkommunikationsschnittstelle,
wobei die Steuereinrichtung (12) ausgebildet und eingerichtet ist,
ein Auswerten durchzuführen, ob eine von dem Radarsensor (8) in einem Erfassungsraum (9) erfasste Geste einer auf der Steuereinrichtung (12) oder auf einem mit der Steuereinrichtung (12) gekoppelten Speichermittel hinterlegten verifizierten Steuergeste entspricht, und
in Reaktion auf ein positives Ergebnis des Auswertens das Verstellen der Fahrzeugklappe (2) beziehungsweise Fahrzeugtür (2`) mittels des Elektromotors (6) zu veranlassen,
wobei das tragbare Steuerungsgerät (5) eine Bedienschnittstelle (5`) aufweist und zur Funkkommunikation mit der Funkkommunikationsschnittstelle (13) der fahrzeugseitigen Steuerungsanordnung (4) ausgebildet und eingerichtet ist,
wobei das tragbare Steuerungsgerät (5) ausgebildet und eingerichtet ist, in Abhängigkeit von einer über die Bedienschnittstelle (5`) erhaltenen Benutzereingabe Konfigurationsanweisungen an die Funkkommunikationsschnittstelle (13) der fahrzeugseitigen Steuerungsanordnung (4) zu senden, und
wobei die Steuereinrichtung (12) ausgebildet und eingerichtet ist, mit den von der Funkkommunikationsschnittstelle (13) empfangenen Konfigurationsanweisungen die hinterlegte verifizierte Steuergeste zu konfigurieren.

2. Steuerungssystem (1) nach Anspruch 1, **dadurch gekennzeichnet, dass** auf dem tragbaren Steuerungsgerät (5) eine Anzahl von mehreren Gestenkonfigurationsdatensätzen hinterlegt ist, die über die Bedienschnittstelle (5`) mittels Benutzereingabe auswählbar sind, wobei nach dem Auswählen eines Gestenkonfigurationsdatensatzes aus der Anzahl von mehreren Gestenkonfigurationsdatensätzen der ausgewählte Gestenkonfigurationsdatensatz als Konfigurationsanweisungen an die Funkkommunikationsschnittstelle (13) übersandt wird.

3. Steuerungssystem (1) nach Anspruch 1, **dadurch gekennzeichnet,**
**dass** auf dem tragbaren Steuerungsgerät (5) eine Anzahl von mehreren Steuergesten repräsentiert wird, die über die Bedienschnittstelle (5`) mittels Benutzereingabe auswählbar sind, wobei nach dem Auswählen einer Steuergeste aus der Anzahl von mehreren Steuergesten ein der Steuergeste zugeordneter Indikator als Konfigurationsanweisungen an die Funkkommunikationsschnittstelle (13) übersandt wird,
wobei auf der Steuereinrichtung (12) oder auf einem mit der Steuereinrichtung (12) gekoppelten Speichermittel eine Anzahl von mehreren Gestenkonfigurationsdatensätzen hinterlegt ist, die den Steuergesten aus der Anzahl von mehreren Steuergesten entsprechen und jeweils einer dieser Steuergesten über den Indikator eineindeutig zuordenbar sind.

4. Steuerungssystem (1) nach Anspruch 2 oder nach Anspruch 3, **dadurch gekennzeichnet, dass** die Benutzereingabe
- eine Auswahl aus einer Liste umfasst und/oder
- eine Ausübung einer Bewegung an dem Steuerungsgerät (5) umfasst, das mit einer als Bewegungssensor ausgebildeten Bedienschnittstelle (5`) ausgestattet ist und/oder
- eine auf einem Touchscreen gemalte Bewegungsausführung umfasst.

5. Steuerungssystem (1) nach Anspruch 3, **dadurch gekennzeichnet, dass** die Benutzereingabe eine auf einem Touchscreen gemalte Bewegungsausführung umfasst, wobei das Steuerungsgerät (5) ausgebildet und eingerichtet ist, aus der Anzahl von mehreren Steuergesten diejenige Steuergeste auszuwählen, welche von der Projektion der Bewegung auf die Abbildungsebene des Touchscreens am geringsten abweicht.

6. Steuerungssystem (1) nach einem der vorhergehenden Ansprüche, **dadurch gekennzeichnet, dass** das Steuerungssystem (1) einen Konfigurationsmodus aufweist, wobei
die Steuerungsanordnung (4) ausgebildet und eingerichtet ist
(i) in dem Konfigurationsmodus die Konfigurationsanweisungen zu empfangen,
nach dem Empfang der Konfigurationsanweisungen in Reaktion auf den Empfang der Konfigurationsanweisungen
(ii) den Erfassungsraum auf eine Geste zu überwachen, und, wenn eine Geste erfasst wird, ein Auswerten durchzuführen, ob die von dem Radarsensor (8) erfasste Geste den Konfigurationsanweisungen entspricht, und
(iiia) im Negativfall ein erstes Feedbacksignal auszugeben und mit Schritt (ii) wiederholend fortfahren, und
(iiib) im Positivfall ein zweites Feedbacksignal auszugeben, mit den Konfigurationsanweisungen die verifizierte Steuergeste zu konfigurieren und sodann den Konfigurationsmodus zu verlassen.

7. Steuerungssystem (1) nach einem der vorhergehenden Ansprüche, **dadurch gekennzeichnet, dass** die Funkkommunikationsschnittstelle (13) eine Bluetooth^{®}-Schnittstelle ist.

8. Steuerungssystem (1) nach einem der vorhergehenden Ansprüche, **dadurch gekennzeichnet, dass** das tragbare Steuerungsgerät (5) ein Smartphone mit einer als Touchscreen ausgebildeten Bedienschnittstelle (5`) ist und/oder einer als Bewegungssensor ausgebildeten Bedienschnittstelle (5`) ist.

9. Kraftfahrzeug (3), aufweisend eine Fahrzeugklappe (2) und/oder eine Fahrzeugtür (2`), sowie aufweisend ein Steuerungssystem (1) nach einem der vorhergehenden Ansprüche zum berührungslosen Verstellen der Fahrzeugklappe (2) beziehungsweise Fahrzeugtür (2`).
